# EUROPEAN PATENT SPECIFICATION

(11) **EP 2 509 739 B1**
(45) Date of publication and mention of the grant of the patent: **09.11.2016**
(21) Application number: 10787126.1
(22) Date of filing: 07.12.2010
(51) Int. Cl.: B23K 15/00, B23K 26/06, B23K 26/26, B23K 26/32, F01D 5/04, F01D 5/30, F04D 29/28

(54) **METHOD OF BEAM WELDING OF AN IMPELLER WITH PERFORMANCE OF TWO PASSES ON A SLOT ; IMPELLER AND TURBO MACHINE HAVING SUCH WELD CONFIGURATION**
VERFAHREN ZUM STRAHLSCHWEISSEN EINES FLÜGELRADES MIT ZWEI ARBEITSSCHRITTEN AUF EINEM SCHLITZ, FLÜGELRAD UND TURBOMASCHINE MIT DERARTIGER SCHWEISSUNG
PROCÉDÉ DE SOUDAGE PAR FAISCEAU D'UN ROUET AVEC RÉALISATION DE DEUX PASSES SUR UNE ENCOCHE, ROUET ET TURBOMACHINE PRÉSENTANT CETTE CONFIGURATION DE SOUDAGE

(30) Priority: 11.12.2009 IT CO20090063
(43) Date of publication of application: 17.10.2012
(73) Proprietor: Nuovo Pignone S.p.A., 50127 Florence (IT)
(72) Inventor: CANTELLI, Ugo, I-50025 Florence (IT); MINIATI, Enzo, I-50131 Firenze (IT); INNOCENTI, Mirco, I-50127 Firenze (IT)
(74) Representative: Illingworth-Law, William Illingworth
(86) International application number: PCT/EP2010/069022
(87) International publication number: WO 2011/069989

(56) References cited:
- JP-A- 4 123 881
- JP-A- 5 177 373
- US-A- 4 201 516
- US-A- 5 483 034
- US-A- 5 735 672
- US-A- 5 841 098

## Description

### TECHNICAL FIELD

The present invention relates generally to compressors and, more specifically, a method of beam welding an impeller blade to a surface and an impeller according to the preamble of claims 1 and 4 respectively (see, for example, JP 4 123 881 A).

### BACKGROUND

A compressor is a machine which accelerates gas particles to, ultimately, increase the pressure of a compressible fluid, e.g., a gas, through the use of mechanical energy. Compressors are used in a number of different applications, including operating as an initial stage of a gas turbine engine. Among the various types of compressors are the so-called centrifugal compressors, in which mechanical energy operates on gas input to the compressor by way of centrifugal acceleration, e.g., by rotating a centrifugal impeller (sometimes also called a "rotor") by which the compressible fluid is passing. More generally, centrifugal compressors can be said to be part of a class of machinery known as "turbo machines" or "turbo rotating machines". Centrifugal compressors can be fitted with a single impeller, i.e., a single stage configuration, or with a plurality of impellers in series, in which case they are frequently referred to as multistage compressors. Each of the stages of a centrifugal compressor typically includes an inlet conduit for gas to be compressed, an impeller which is capable of imparting kinetic energy to the input gas and a diffuser which converts the kinetic energy of the gas leaving the rotor into pressure energy.

An impeller generally includes a plurality of blades which are disposed radially relative to one another to form a plurality of passages which converge toward the center of the impeller and through which, in operation, the compressible gas flows. The blades are connected on one end to a hub and, on the other end, to a shroud. Such impellers are subjected to significant stresses during operation, attributable to, for example, the high speeds at which they are rotated and the high densities at which the compressible gases are provided to the centrifugal compressors. Thus, it is important to design such impellers to withstand such stresses and operate stably for long periods of time.

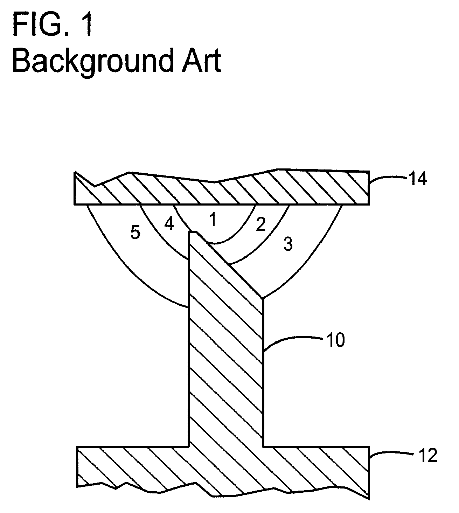

The manner in which the blades are connected to the hub and shroud are, therefore, quite important to the overall design of the impeller and a number of different connection techniques have been used previously. It is not unusual for the blades to be milled together with the hub as one piece, and then to be connected to the shroud, e.g., by welding. For example, as shown in Figure 1, an impeller blade 10 has a cross-sectional connection area which is generally triangular in shape, albeit with a small flattened portion near the tip, and is integrally formed with a hub 12. This blade 10 can be connected to a shroud 14 using an internal, manual arc welding technique. Therein five arc welding passes are made (as shown by zones 1-5) to weld the end of the blade 10 to the surface of the shroud 14. However, this connection process suffers from the common drawbacks of manual processes, e.g., lack of uniformity in the welds and cost inefficiencies, the former resulting in connection deformation defects that prevent the impeller from withstanding operational stresses due to geometrical variances in the blade created by the manual welding connection process. The final shape of the blade after it is connected to the shroud using manual arc welding will thus vary from blade to blade within the impeller.

JP 4 123881 A discloses a Tee joint with a side plate having an opening hole where a joint part of a blade is inserted. US 4 201 516 discloses securing a blade within a slot formed in a hub by welding the blade to one side of the slot. JP 5 177373 A discloses laser beam welding with one weld line.

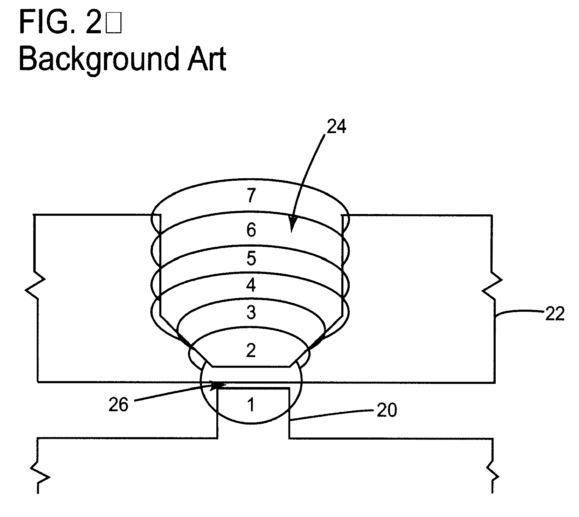

Automated, external connection techniques have also been proposed. For example, as shown in Figure 2, an automated tungsten inert gas (TIG) welding process can be used to attach a blade 20 to shroud 22. In this connection mechanism, a slot 24 is formed in the shroud 22 which is initially covered by a relatively thin metal portion or membrane 26. In this technique, it can be seen that the connection area of the blade 20 has a generally rectangular cross-sectional shape. The weld is performed through a series of welding passes (labeled as zones 1-7 in Figure 2) from the outside of the shroud 22, the first of which melts the thin metal portion 26, and the remainder of which fill in the slot 24. This welding process is also intended to generate a fillet radius (curved connection areas) between the blade 20 and the shroud 22. However, since the welding process itself is intended to generate the curved areas on either side of the blade 20, the result is inherently non-uniform fillet radii as between the various blades within the impeller.

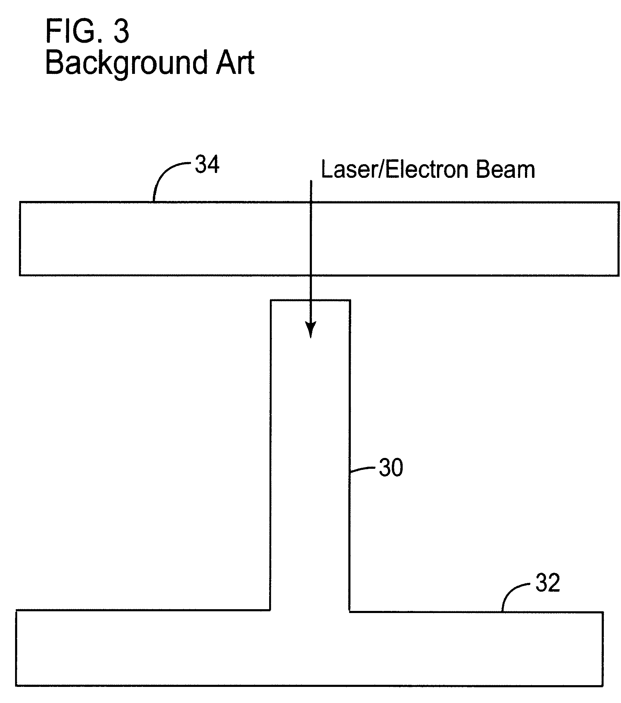

Electron beam and laser beam welding techniques have also been used to connect impeller blades to the shroud. As shown in Figure 3, a blade 30, which is milled onto the hub 32 and has a typical rectangular-shaped connection area cross section, can be welded to the shroud 34 by directly applying the electron beam or laser beam through the shroud 34 to the connection area of the blade 30 and melting the blade 30 onto the shroud 34. However, this approach also suffers from a number of drawbacks. For example, in the connection area between the blade 30 and the shroud 34, there are no fillet radii generated by this welding processing, i.e., the edges of the blade 30 remain straight and perpendicular relative to the surface of the shroud. Moreover, there is no penetration of the blade 30's connection area into the shroud 34, resulting in incomplete welds. From a production perspective, such incomplete welds make historical electron beam or laser beam welding techniques inappropriate for manufacturing impellers. Another drawback of these techniques is the lack of precision associated with the welding process which makes it difficult to provide the weld directly in the center of the blade tip, thereby creating additional defects in the joint. This problem becomes more significant as the complexity of the blade shape, e.g., curves and twists, increases.

Brazing techniques have also been used, either by themselves or in conjunction with beam welding techniques, to attach impellers to other surfaces. However these techniques also suffer from the lack of penetration, lack of fillet radii and incomplete welding issues described above. Moreover, the joint created using brazing techniques is not homogenous resulting in potentially reduced mechanical characteristics of the joint, especially in operating conditions which include corrosive gases that may attack the brazing material.

Accordingly, it would be desirable to design and provide techniques for electron beam/laser beam welding of impeller blades to other surfaces, e.g., shrouds, which overcome the aforementioned drawbacks of existing welding techniques.

### SUMMARY

The present invention provides a method of beam welding an impeller blade to a surface as defined in claim 1 and an impeller as defined in claim 4.

Exemplary embodiments relate to a method of enabling automated beam welding techniques to be used for joining an impeller blade to, e.g., a shroud. According to the present invention, a connection area of the impeller blade has a "hammer"-shaped cross-sectional area which facilitates beam welding of the connection area to a slot in the surface or body to which the blade is to be connected.

### BRIEF DESCRIPTION OF THE DRAWINGS

The accompanying drawings illustrate exemplary embodiments, wherein:
Figure 1 illustrates a manual arc welding technique for an impeller blade;
Figure 2 depicts an automated, external welding technique for an impeller blade;
Figure 3 shows a conventional beam welding technique for an impeller blade;
Figure 4 depicts an exemplary centrifugal compressor in which impellers manufactured according to exemplary embodiments can be employed;
Figures 5 and 6 show an exemplary impeller which can be manufactured according to exemplary embodiments;
Figure 7 depicts an impeller connection area and method for beam welding of an impeller to another surface according to an exemplary embodiment; and
Figure 8 is a flowchart illustrating a method for welding an impeller to another surface according to an exemplary embodiment.

### DETAILED DESCRIPTION

The following detailed description of the exemplary embodiments refers to the accompanying drawings. The same reference numbers in different drawings identify the same or similar elements. Also, the following detailed description does not limit the invention. Instead, the scope of the invention is defined by the appended claims.

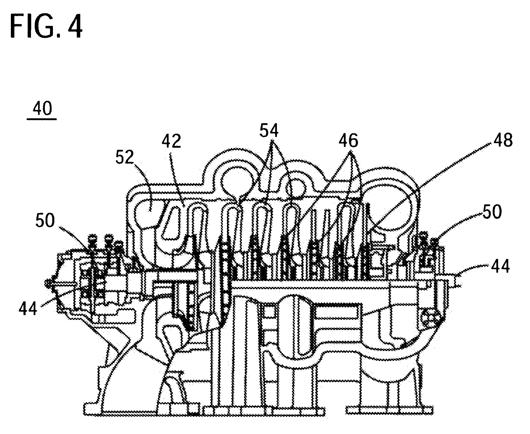

To provide some context for the subsequent discussion relating to welding techniques and impeller blade connection area shapes according to these exemplary embodiments, Figure 4 schematically illustrates a multistage, centrifugal compressor 40 in which impellers fabricated using such techniques may be employed. Therein, the compressor 40 includes a box or housing (stator) 42 within which is mounted a rotating compressor shaft 44 that is provided with a plurality of centrifugal rotors or impellers 46. The rotor assembly 48 includes the shaft 44 and rotors 46 and is supported radially and axially through bearings 50 which are disposed on either side of the rotor assembly 48.

The multistage centrifugal compressor operates to take an input process gas from duct inlet 52, to accelerate the process gas particles through operation of the rotor assembly 48, and to subsequently deliver the process gas through various interstage ducts 54 at an output pressure which is higher than its input pressure. The process gas may, for example, be any one of carbon dioxide, hydrogen sulfide, butane, methane, ethane, propane, liquefied natural gas, or a combination thereof. Between the impellers 46 and the bearings 50, sealing systems (not shown) are provided to prevent the process gas from flowing to the bearings 50. The housing 42 is configured so as to cover both the bearings 50 and the sealing systems, so as to prevent the escape of gas from the centrifugal compressor 40.

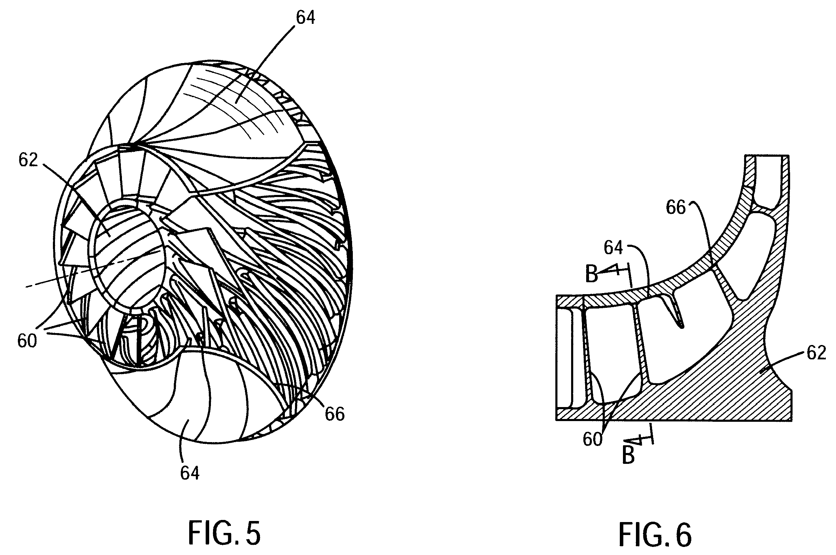

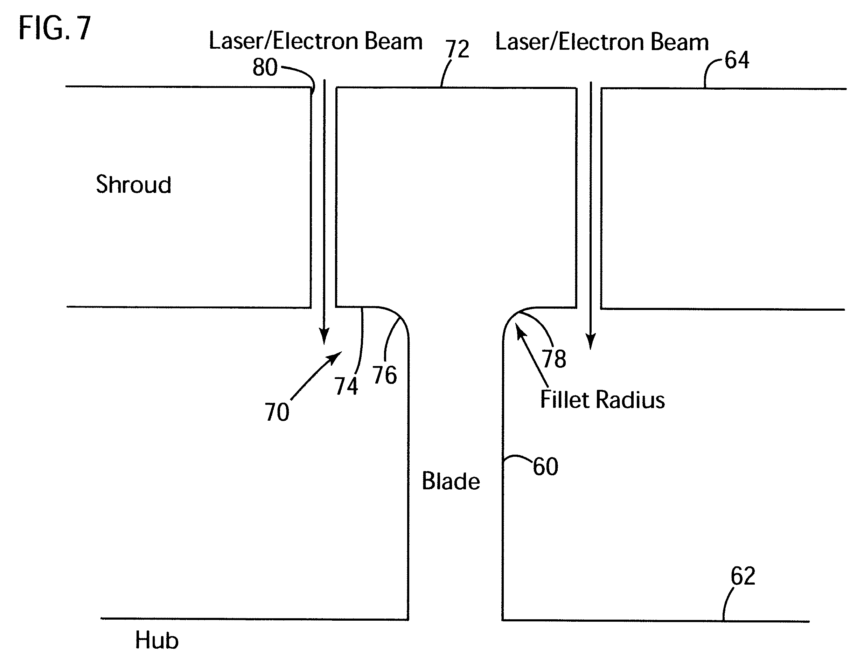

A more detailed, but purely exemplary, illustration of an impeller 46 is provided in Figure 5. Therein it can be seen that the impeller 46 has a plurality of impeller blades 60 oriented radially between a hub 62 and a shroud 64 to which they are attached, e.g., at connection points 66. The exploded section of the impeller 46 reveals the twisted nature of the impeller blades 60 from the narrow end of the impeller 46 to its wider end. Figure 6 is a partial cross-sectional view of the impeller 46 of Figure 5 taken through the center of the impeller. Therein, the connection points 66 of the impeller blades 60 to the shroud 64 can be seen more clearly, and now the mechanisms by which such connections are formed according to exemplary embodiments will be described starting with Figure 7, which is a cross-sectional view taken along the lines B-B in Figure 6.

Therein, the "hammer"-like shape of the connection area 70 of impeller blades 60 according to the present invention is seen. Unlike other impeller blade connection areas described above, it can be seen that the connection area 70 is wider (thicker) from its outer end 72 to its inner end 74 relative to the next adjacent portion of the impeller blade 60. Additionally, at the inner end 74, the connection area 70 joins the rest of the blade 60 via curved sections 76 and 78. These curved sections 76 and 78 are designed with a predetermined radius of curvature (fillet radius) of, e.g., 3-4 mm, to provide the attached impeller blade with desired strength and bending characteristics. Thus, the width (thickness) of the connection area 70 can, for example, be equal to the thickness of the blade 60 plus twice the desired fillet radius.

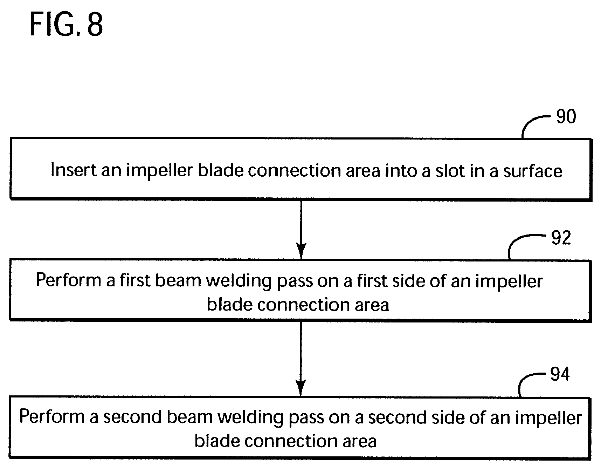

According to an exemplary embodiment, to attach impeller blade 60 to the shroud 64 the welding technique shown in the flowchart of Figure 8 is performed. First, the connection area 70 of the impeller blade 60 is inserted into a corresponding slot 80 in the shroud 64. Then, a laser beam or electron beam welding machine (not shown in Figure 6) generates a laser or electron welding beam in the (small) gap between a side of the connection area 70 and the side of the slot 80 in the shroud 64, and then repeats that process on the other side of the connection area 70, as represented by the two large arrows shown in Figure 6 between the sides of the connection area and the sides of the slot in the shroud. The electron beam welding and/or laser beam welding equipment which is used to perform the welding passes themselves can be standard beam welding equipment as, for example, disclosed in U.S. Patent Nos. 7,312,417 and 7,413,620, the disclosures of which are incorporated here by reference. This two pass beam welding process rapidly creates a solid connection joint on both sides of the connection area 70 to the shroud 64, without melting or otherwise impacting the fillet radii of the curved portions 76 and 78 or deforming the blade 60 because, among other things, the welds are performed along the sides of the connection area 70 and do not modify the 224713 pre-formed fillet radii 76 and 78.

Thus, according to an exemplary embodiment, a method of beam welding an impeller blade to a surface, e.g., a shroud of an impeller, can include the steps illustrated in the flowchart of Figure 8. Therein, at step 90, an impeller blade connection area is inserted into a slot in the surface. Then, at step 92, a first beam welding pass is performed on a first side of the impeller blade connection area to weld the first side of the impeller blade connection area to one side of the slot. Next, at step 94, a second beam welding pass is performed on a second side of the impeller blade connection area to weld the second side of the impeller blade connection area to another side of the slot.

The above-described exemplary embodiments are intended to be illustrative in all respects, rather than restrictive, of the present invention. Thus the present invention is capable of many variations in detailed implementation that can be derived from the description contained herein by a person skilled in the art. All such variations and modifications are considered to be within the scope of the present invention as defined by the following claims. No element, act, or instruction used in the description of the present application should be construed as critical or essential to the invention unless explicitly described as such. Also, as used herein, the article "a" is intended to include one or more items.

## Claims

1. A method of beam welding an impeller blade to a surface, the method **characterised by** comprising:
inserting an impeller blade connection area (70) into a slot in said surface (90);
performing a first beam welding pass on a first side of said impeller blade connection area to weld said first side of said impeller blade connection area to one side of said slot (92); and
performing a second beam welding pass on a second side of said impeller blade connection area to weld said second side of said impeller blade connection area to another side of said slot (94), **characterised in that**
said impeller blade connection area (70) has a hammer-shaped cross sectional area which is wider, from the first end thereof (72) which is inserted into said slot to a second end thereof, than an adjacent portion (60) of said impeller blade, and two curved sections (76,78) which connect said impeller blade connection area to said adjacent portion (60) of said impeller blade;
and **in that** said two curved sections (76, 78) each have a predetermined radius of curvature and are not impacted by said first and second beam welding process.

2. The method of claim 1, wherein said beam welding process is one of a laser beam welding process and an electron beam welding process.

3. The method of claim 1 or claim 2, wherein the impeller blade connection area (70) is inserted into a slot in a shroud (64).

4. An impeller comprising:
a hub (62) having a plurality of impeller blades milled (60) therein;
and
a shroud (64) having slots formed therein and connected to each of said plurality of impeller blades (60) at impeller blade connection areas (70) by a beam welding seam made in two passes achieved by the method of any one of the preceding claims, **characterised in that** said impeller blade connection area (70) has a hammer-shaped cross sectional area which is wider, from a first end thereof (72) which is inserted into a corresponding slot to a second end (74) thereof, than an adjacent portion (60) of said impeller blade, and **in that** said impeller blade connection area further comprises two curved sections (76, 78) which connect said impeller blade connection area (70) to said adjacent portion (60) of said impeller blade, wherein said two curved portions (76, 78) each have a predetermined radius of curvature and are not impacted by said first and second beam welding passes.

5. A turbo machine comprising:
a rotor assembly including at least one impeller according claim 4;
a bearing connected to, and for rotatably supporting, the rotor assembly; and
a stator.

## Patentansprüche

1. Verfahren zum Strahlschweißen eines Laufradflügels an eine Oberfläche, wobei das Verfahren **dadurch gekennzeichnet ist, dass** es Folgendes umfasst:
Einführen eines Laufradflügelverbindungsbereichs (70) in einen Schlitz in der Oberfläche (90);
Durchführen eines ersten Strahlschweißgangs auf einer ersten Seite des Laufradflügelverbindungsbereichs, um die erste Seite des Laufradflügelverbindungsbereichs mit einer Seite des Schlitzes (92) zu verschweißen; und
Durchführen eines zweiten Strahlschweißgangs auf einer zweiten Seite des Laufradflügelverbindungsbereichs, um die zweite Seite des Laufradflügelverbindungsbereichs mit einer anderen Seite des Schlitzes (94) zu verschweißen, **dadurch gekennzeichnet, dass**
der Laufradflügelverbindungsbereich (70) einen hammerförmigen Querschnittsbereich aufweist, welcher von dem ersten Ende davon (72), welches in den Schlitz zu einem zweiten Ende davon eingeführt ist, breiter ist als ein benachbarter Abschnitt (60) des Laufradflügels,
und zwei gekrümmte Abschnitte (76, 78), welche den Laufradflügelverbindungsbereich mit dem benachbarten Abschnitt (60) des Laufradflügels verbinden;
und dass
die beiden gekrümmten Abschnitte (76, 78) jeweils einen vorbestimmten Krümmungsradius aufweisen und nicht von dem ersten und zweiten Strahlschweißvorgang betroffen sind.

2. Verfahren nach Anspruch 1, wobei der Strahlschweißvorgang einer eines Laserstrahlschweißvorgangs und eines Elektronenstrahlschweißvorgangs ist.

3. Verfahren nach Anspruch 1 oder 2, wobei der Laufradflügelverbindungsbereich (70) in einen Schlitz in einer Ummantelung (64) eingeführt ist.

4. Laufrad umfassend:
eine Nabe (62), in der mehrere Laufradflügel (60) eingefräst sind; und
eine Ummantelung (64), in der Schlitze gebildet sind, und die mit jeder der mehreren Laufradschaufeln (60) an Laufradschaufelverbindungsbereichen (70) durch eine Strahlschweißnaht, die in zwei Gängen hergestellt ist, durch das Verfahren nach einem der vorherigen Ansprüche verbunden ist, **dadurch gekennzeichnet, dass** der Laufradflügelverbindungsbereich (70) einen hammerförmigen Querschnittsbereich aufweist, welcher von einem ersten Ende davon (72), welches in einen entsprechenden Schlitz zu einem zweiten Ende (74) davon eingeführt ist, breiter ist als ein benachbarter Abschnitt (60) der Laufradschaufel, und dass der Laufradschaufelverbindungsbereich ferner zwei gekrümmte Abschnitte (76, 78) umfasst, welche die Laufradschaufelverbindungsbereiche (70) mit dem benachbarten Abschnitt (60) der Laufradschaufel verbinden, wobei die beiden gekrümmten Abschnitte (76, 78) jeweils einen vorbestimmten Krümmungsradius aufweisen und nicht von dem ersten und zweiten Strahlschweißgang betroffen sind.

5. Turbomaschine umfassend:
eine Rotoranordnung, die mindestens ein Laufrad nach Anspruch 4 beinhaltet;
ein Lager, das mit der Rotoranordnung verbunden ist und diese drehbar stützt; und
einen Stator.

## Revendications

1. Procédé de soudage par faisceau d'une pale de turbine à une surface, le procédé étant **caractérisé en ce qu'**il comprend :
l'insertion d'une zone de liaison de pale de turbine (70) dans une encoche de ladite surface (90) ;
la réalisation d'une première passe de soudage par faisceau sur un premier côté de ladite zone de liaison de pale de turbine pour souder ledit premier côté de ladite zone de liaison de pale de turbine à un côté de ladite encoche (92) ; et
la réalisation d'une seconde passe de soudage par faisceau sur un second côté de ladite zone de liaison de pale de turbine pour souder ledit second côté de ladite zone de liaison de pale de turbine à un autre côté de ladite encoche (94),
**caractérisé en ce que** :
ladite zone de liaison de pale de turbine (70) a une surface en coupe transversale en forme de marteau qui est plus large, de sa première extrémité (72) qui est insérée dans ladite encoche à sa seconde extrémité, qu'une partie adjacente (60) de ladite pale de turbine,
et deux sections incurvées (76, 78) qui raccordent ladite zone de liaison de pale de turbine à ladite partie adjacente (60) de ladite pale de turbine ;
et **en ce que** lesdites deux sections incurvées (76, 78) ont chacune un rayon de courbure prédéterminé et ne sont pas impactées par lesdits premier et second processus de soudage par faisceau.

2. Procédé selon la revendication 1, dans lequel ledit processus de soudage par faisceau est l'un parmi un processus de soudage par faisceau laser et un processus de soudage par faisceau électronique.

3. Procédé selon la revendication 1 ou la revendication 2, dans lequel la zone de liaison de pale de turbine (70) est insérée dans une encoche d'un carénage (64).

4. Turbine comprenant :
un moyeu (62) ayant une pluralité de pales de turbine (60) qui y sont fraisées ; et
un carénage (64) ayant des encoches qui y sont formées et sont raccordées à chacune de ladite pluralité de pales de turbine (60) dans des zones de liaison de pales de turbine (70) par un cordon de soudure par faisceau effectué en deux passes réalisées par le procédé selon l'une quelconque des revendications précédentes, **caractérisé en ce que** ladite zone de liaison de pale de turbine (70) a une surface en coupe transversale en forme de marteau qui est plus large, de sa première extrémité (72) qui est insérée dans une encoche correspondante à sa seconde extrémité (74), qu'une partie adjacente (60) de ladite pale de turbine et **en ce que** ladite zone de liaison de pale de turbine comprend en outre deux sections incurvées (76, 78) qui raccordent ladite zone de liaison de pale de turbine (70) à ladite partie adjacente (60) de ladite pale de turbine, dans lequel lesdites deux parties incurvées (76, 78) ont chacune un rayon de courbure prédéterminé et ne sont pas impactées par lesdites première et seconde passe de soudage par faisceau.

5. Turbomachine comprenant :
un ensemble de rotor comprenant au moins une turbine selon la revendication 4,
un palier raccordé à l'ensemble de rotor et supportant à rotation celui-ci ; et un stator.
